# EUROPÄISCHE PATENTSCHRIFT

(11) **EP 0 763 877 B1**
(45) Veröffentlichungstag und Bekanntmachung des Hinweises auf die Patenterteilung: **03.02.1999**
(21) Anmeldenummer: 96114615.6
(22) Anmeldetag: 11.09.1996
(51) Int. Cl.: H02H 3/14, H04B 3/54

(54) **Kommunikationssystem**
Communication system
Systéme de communication

(30) Priorität: 18.09.1995 DE 19534561
(43) Veröffentlichungstag der Anmeldung: 19.03.1997
(73) Patentinhaber: SIEMENS AKTIENGESELLSCHAFT, 80333 München (DE)
(72) Erfinder: Schmitt, Manfred, Dipl.-Ing., 92256 Hahnbach (DE); Wiesgickl, Bernhard, Dipl.-Ing. (FH), 92249 Vilseck (DE)

(56) Entgegenhaltungen:
- EP-A- 0 365 696
- WO-A-94/18803
- US-A- 4 423 506

## Beschreibung

Die Erfindung bezieht sich auf ein Kommunikationssystem mit einem Master und einem Netzteil, die über einen einzigen Leitungsstrang mit mindestens einem Slave verbunden sind, wobei der Leitungsstrang zur Stromversorgung und zum Datenaustausch zwischen dem Master und Slave dient und das Kommunikationssystem nicht geerdet ist, sowie mit mindestens einem an den Slave angeschlossenen Geber, in dessen Gehäuse ein Schaltelement liegt, das bei Ansprechen des Gebers an den Slave ein "Schalt"-Signal leitet.

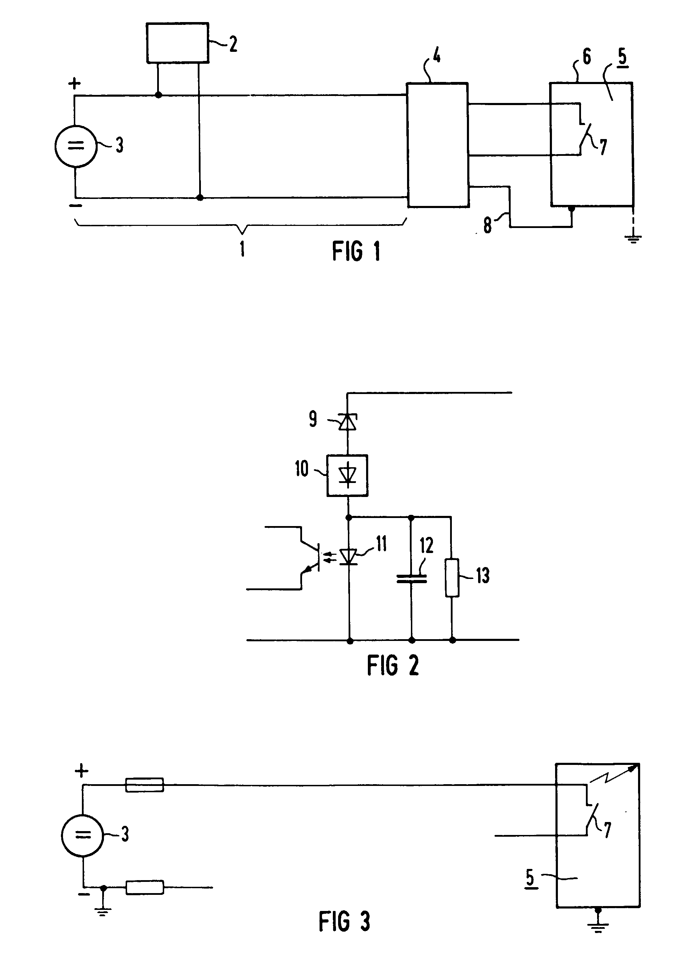

Ein gattungsgemäßes Kommunikationssystem ist der Siemens-Druckschrift (Bestell-Nr. E 20.001-P 285-A 497) zu entnehmen. In derartigen Systemen ist es bekanntermaßen üblich, die Gehäuse der Geber zu erden, um Fehlsignale für nachgeschaltete Eingabebaugruppen zu vermeiden. Die Erdung, die hier nicht den Personenschutz vor gefährlicher Spannung am Gehäuse zum Ziel hat, wird anhand von FIG 3 näher erläutert. In FIG 3 ist eine geerdete Spannungsquelle über eine Leitung mit einem ebenfalls geerdeten Geber verbunden, wobei im Leitungszug eine Sicherung eingeschaltet ist. Zum Beispiel durch alterungsbedingte Undichtigkeit können in das Gebergehäuse Wasser oder Metallspäne eindringen und dadurch kann ein Schaltkontakt überbrückt werden. In diesem Falle würde einer angeschlossenen Eingabebaugruppe ein "Eins"- bzw. "Schalt"-Signal vorgetäuscht werden. Man kann mit hoher Wahrscheinlichkeit davon ausgehen, daß die eingedrungene Feuchtigkeit bzw. die Metallspäne gleichzeitig eine leitende Verbindung zwischen dem Schaltelement und dem Gehäuse herstellen. Durch die Erdung von Spannungsquelle und Gehäuse fließt daher zwischen Gehäuse und Schaltelement ein Kurzschlußstrom, durch den die vorgeschaltete Sicherung ausgelöst wird. Damit würden auch an die Versorgungsspannung angeschlossene Geber von dieser abgekoppelt werden, die keinen Fehler aufweisen. Diese Methode hat außerdem den Nachteil, daß die Sicherung erst bei hohen Kurzschlußströmen auslöst, während bereits ein Eingangsstrom von 5 mA als Schaltsignal für Eingabebaugruppen ausreicht.

Der Erfindung liegt daher die Aufgabe zugrunde, ein Kommunikationssystem der obengenannten Art zu schaffen, bei dem im Fehlerfall nur die fehlerbehafteten Geber bzw. ein Teil des Kommunikationssystems abgeschaltet werden, während der Betrieb des übrigen Kommunikationssystems aufrechterhalten werden kann. Die Aufgabe wird erfindungsgemäß dadurch gelöst, daß an das Gehäuse des Gebers oder der Geber eine Potentialerkennungseinrichtung angeschlossen ist.

Eine vorteilhafte Weiterbildung der Erfindung besteht, wenn die Potentialerkennungseinrichtung eine Reihenschaltung aus einer Zenerdiode, einer Konstantstromdiode, einem Optokoppler und einen zu diesem parallel geschalteten Kondensator und Widerstand umfaßt. Dies ermöglicht Fehlerströme unterhalb dem Eingangsstrom für das "Schalt"-Signal zu erfassen und eine entsprechende Fehlermeldung an den Master zu veranlassen. Durch die Zenerdiode läßt sich das Ansprechen der Potentialerkennungseinrichtung infolge von vagabundierenden Erdströmen ausschließen, während durch den Kondensator, den Widerstand und die Konstantstromdiode gewährleistet wird, daß erst oberhalb einer bestimmten Stromstärke und Signaldauer die Schaltung wirksam wird und damit ein Ansprechen bei kurzzeitigen Stör-Stromimpulsen vermieden wird.

Weiterhin ist es vorteilhaft, wenn an den Slave mehrere Geber angeschlossen sind, deren Gehäuse elektrisch leitend miteinander verbunden sind, wobei zur Potentialmessung an den Gehäusen eine einzige Potentialerkennungseinrichtung vorgesehen ist. Diese Ausführungsform ermöglicht es, mehrere Geber mit einer einzigen Potentialerkennungseinrichtung zu überwachen. Bei einem Erdschluß an einem dieser Geber ließen sich nur die miteinander verbundenen Geber vom Kommunikationssystem ausschließen.

Eine Ausführungsform der Erfindung wird im folgenden anhand einer Zeichnung näher erläutert. Es zeigen:
- FIG 1: ein Kommunikationssystem mit einer Potentialerkennungseinrichtung an einem Gebergehäuse
- FIG 2: den Aufbau einer Potentialerkennungseinrichtung.

FIG 1 zeigt ein Kommunikationssystem, bei dem an einem als Zweidrahtleitung 1 ausgeführten Leitungsstrang ein zur Steuerung dienender Master 2, ein Netzteil 3 und beispielhaft ein Slave 4 als Eingabebaugruppe angeschlossen sind. Mit dem Slave 4 sind in der Regel mehrere Geber 5 elektrisch verbunden, in deren Gehäuse 6 sich jeweils ein Schaltkontakt 7 befindet, der bei Ansprechen ein Schalt-Signal an den Slave 4 leitet. In FIG 1 ist beispielhaft der Anschluß eines Gebers 5 dargestellt. Zwischen dem Netzteil 3 und dem Slave 4 ist das Kommunikationssystem ungeerdet. Das Gehäuse 6 des Gebers 5 kann geerdet sein. Die Zweidrahtleitung 1 dient zur Stromversorgung der angeschlossenen Komponenten 2,4 sowie zum Datenaustausch zwischen dem Master 2 und dem Slave 4. Die Versorgung des Gebers 5 erfolgt über den Slave 4.

Der mögliche Aufbau eines derartigen Kommunikationssystems und seine Funktion sind in der Siemens-Druckschrift (Bestell-Nr. E 20.001-P 285-A 497) näher beschrieben.

Der Slave 4 ist erfindungsgemäß mit einer Potentialerkennungseinrichtung 8 ausgestattet, an die das Gehäuse 6 des Gebers 5 angeschlossen ist. Bei fehlerfreier Funktion liegt an dem Gehäuse 6 des Gebers 5 das Potential Null bezogen auf den Slave 4 an. Eine leitende Verbindung zwischen spannungsführenden Teilen, z.B. dem Schaltelement 7 des Gebers 5 und dem Gehäuse 6, kann im Laufe des Einsatzes des Gebers 5 alterungsbedingt, z.B. infolge von Undichtigkeit bei Eintritt von Feuchtigkeit auftreten und fälschlicherweise ein Ansprechen des Gebers 5 vortäuschen. Das fehlerbedingte Ansprechen wird mittels der Potentialerkennungseinrichtung 8 erfaßt, die die mit der Störung verbundene Potentialanhebung des Gehäuses 6 erfaßt. Über den Optokoppler 11 gemäß FIG 2 erfolgt in diesem Fall eine Meldung an den Slave 4 und von diesem an den Master 2. An einen einzigen Slave 4 können mehrere Geber 5 angekoppelt sein, zu deren Überwachung prinzipiell zwei Ausführungen denkbar sind.

Zum einen ist jedes der Gehäuse 6 der Geber 5 mit dem betreffenden Slave 4 über eine Potentialerkennungseinrichtung 8 verbunden, wie FIG 1 zeigt. In diesem Fall könnte durch die Potentialerkennungseinrichtung 8 dem Master 2 gemeldet werden, welcher der Geber 5 fehlerbehaftet ist, um schnell und gezielt einen Austausch vorzunehmen oder seine störende Fehlfunktion im System auszuschalten. Dies setzt jedoch voraus, daß die einzelnen Gehäuse 6 der Geber 5 nicht miteinander leitend verbunden sind. Zum anderen besteht die Möglichkeit, zwischen den Gehäusen 6 der an einen Slave 4 angeschlossenen Geber 5 eine leitende Verbindung vorzusehen. In diesem Fall ist nur eine einzige Potentialerkennungseinrichtung 8 zwischen einem der Gehäuse 6 und dem Slave 4 notwendig. Besteht dabei zwischen den Gehäusegruppen der einzelnen Slaves keine elektrisch leitende Verbindung kann bei Ansprechen der Potentialerkennungseinrichtung 8 die Fehlersuche nur auf die miteinander verbundenen Gebergruppe 5 eingeschränkt werden. Der Betrieb des Kommunikationssystems mit den anderen angeschlossenen Slaves 4 kann währenddessen jedoch aufrechterhalten bleiben.

Die Potentialerkennungseinrichtung 8 ist gemäß FIG 2 aus einer Zenerdiode 9, einer Konstantstromdiode 10 und einem Optokoppler 11, einen Kondensator 12 und einen Widerstand 13 aufgebaut. Eine geringe Potentialanhebung des Gehäuses 6 kann bereits als Folge von über die Erdleitung vagabundierenden Strömen auftreten. Solche Potentialanhebung, die im ungestörten Betrieb des Gebers 5 möglich ist, ist von oben erwähnten Störungen zu unterscheiden und darf nicht zum Ansprechen der Potentialerkennungseinrichtung 8 führen. Um dies sicherzustellen, ist die Potentialerkennungseinrichtung 8 mit der Zenerdiode 9 versehen, die die Erfassung erst oberhalb einer bestimmten Schwellspannung gewährleistet. Außerdem muß das Ansprechen der Potentialerkennungseinrichtung 8 aufgrund von Stromimpulsen in der Erdleitung verhindert werden, die kurzzeitig das Potential des Gehäuses 6 anheben, d.h. hierfür muß die Potentialerkennungseinrichtung 8 Filterwirkung besitzen. Dies wird durch die Verwendung der Konstantstromdiode 10 in Verbindung mit dem Kondensator 12 erreicht, da die Konstantstromdiode erst ab einem gewissen Strom leitend wird und kurze Störimpulse durch den Kondensator 12 ausgefiltert werden. Durch den Aufbau der Potentialerkennungseinrichtung 8 mit Konstantstromdiode 10, Zenerdiode 9, den Kondensator 12 und den Widerstand 13 ist es möglich, bereits Fehlerströme unterhalb des Eingangsstroms für das "Schalt"- bzw. "Eins"- Signal zu erfassen und eine entsprechende Fehlermeldung an den Master 2 zu veranlassen.

Die Ausstattung mit Potentialerkennungseinrichtung ermöglicht es also, die fehlerbehafteten Geber 5 schnell aufzusuchen und ihren störenden Einfluß bei Aufrechterhaltung des ungestörten Systems auszuschalten. Zudem kann eine zusätzliche Leitung zur Erdung der Gebergehäuse und dem Netzteil 3 entfallen.

## Patentansprüche

1. Kommunikationssystem mit einem Master (2) und einem Netzteil (3), die über einen einzigen Leitungsstrang (1) mit mindestens einem Slave (4) verbunden sind, wobei der Leitungsstrang zur Stromversorgung und zum Datenaustausch zwischen dem Master (2) und dem Slave (4) dient und das Kommunikationssystem nicht geerdet ist, sowie mit mindestens einem an den Slave (4) angeschlossenen Geber (5), in dessen Gehäuse (6) ein Schaltelement (7) liegt, das bei Ansprechen des Gebers (5) an den Slave (4) ein Schalt-Signal leitet, **dadurch gekennzeichnet,** daß an das Gehäuse (6) des Gebers (5) oder der Geber (5) eine Potentialerkennungseinrichtung (8) angeschlossen ist.

2. Kommunikationssystem nach Anspruch 1, **dadurch gekennzeichnet,** daß die Potentialerkennungseinrichtung (8) eine Reihenschaltung aus einer Zenerdiode (9), einer Konstantstromdiode (10) und einem Optokoppler (11), dem ein Kondensator 12 und ein Widerstand 13 parallelgeschaltet ist, aufweist.

3. Kommunikationssystem nach Anspruch 1 oder 2, **dadurch gekennzeichnet,** daß an den Slave (4) mehrere Geber (5) angeschlossen sind, deren Gehäuse (6) elektrisch leitend miteinander verbunden sind, wobei zur Potentialmessung an den Gehäusen (6) eine einzige Potentialerkennungseinrichtung (8) vorgesehen ist.

## Claims

1. Communication system having a master (2) and a power supply unit (3) which are connected by way of a single line phase (1) to at least one slave (4), with the line phase being used for the supply of current and for the exchange of data between the master (2) and the slave (4), and with the communication system not being earthed, and having at least one sensor (5) connected to the slave (4), in the housing (6) of which sensor there is a switching element (7) which conducts a switching signal to the slave (4) upon the operation of the sensor (5), characterized in that a potential detection device (8) is connected to the housing (6) of the sensor (5) or sensors (5).

2. Communication system according to claim 1, characterized in that the potential detection device (8) has a series circuit comprising a Zener diode (9), a constant-current diode (10) and an optical coupler (11), with which a capacitor 12 and a resistance 13 are connected in parallel.

3. Communication system according to claim 1 or 2, characterized in that several sensors (5) are connected to the slave (4), the housings (6) of which sensors are electroconductively connected to each other, with a single potential detection device (8) being provided for potential measurement at the housings (6).

## Revendications

1. Système de communication comportant un maître (2) et un bloc (3) d'alimentation qui sont reliés à un esclave (4) par l'intermédiaire d'une seule voie (1) de conduction, la voie de conduction servant à l'alimentation en courant et à l'échange de données entre le maître (2) et l'esclave (4) et le système de communication n'étant pas mis à la terre, ainsi que comportant au moins un émetteur (5) qui est raccordé à l'esclave (4) et dans le boîtier (6) duquel se trouve un élément (7) de commutation qui, en cas de réaction de l'émetteur (5), envoie un signal de commutation à l'esclave (4), caractérisé en ce qu'un dispositif (8) de reconnaissance de potentiel est raccordé au boîtier (6) de l'émetteur (5) ou des émetteurs (5).

2. Système de communication suivant la revendication 1, caractérisé en ce que le dispositif (8) de reconnaissance de potentiel comporte un circuit série constitué d'une diode (9) Zener, d'une diode (10) à courant constant et d'un optocoupleur (11) et, en parallèle avec ce dernier, sont branchés un condensateur (12) et une résistance (13).

3. Communication suivant la revendication 1 ou 2, caractérisé en ce qu'il est raccordé à l'esclave (4) plusieurs émetteurs (5) dont les boîtiers (6) sont reliés entre eux de manière conductrice de l'électricité, un seul dispositif (8) de reconnaissance de potentiel étant prévu pour la mesure de potentiel sur les boîtiers (6).
